(19) **Europäisches Patentamt / European Patent Office / Office européen des brevets**

(11) **EP 3 109 585 B1**

(12) # EUROPEAN PATENT SPECIFICATION

(45) Date of publication and mention
of the grant of the patent:
**29.08.2018 Bulletin 2018/35**

(51) Int Cl.:
***F41G 1/50*** *(2006.01)*    ***F41G 1/38*** *(2006.01)*
***F41G 3/14*** *(2006.01)*

(21) Application number: **16164256.6**

(22) Date of filing: **07.04.2016**

(54) **DIGITAL SIGHT FOR REAL-TIME POSITION CONTROL OF MANUALLY-PORTABLE MORTAR BARREL**

DIGITALE VISIERVORRICHTUNG ZUR ECHTZEITPOSITIONSREGELUNG EINES TRAGBAREN MÖRSERROHRS

VISEUR NUMÉRIQUE POUR COMMANDE DE POSITION EN TEMPS RÉEL D'UN CANON DE MORTIER PORTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2015 KR 20150091160**

(43) Date of publication of application:
**28.12.2016 Bulletin 2016/52**

(73) Proprietor: **Agency For Defense Development Daejeon 34060 (KR)**

(72) Inventors:
• **LEE, Tae-Gyoo**
  **08729 Seoul (KR)**
• **JANG, Suk-Won**
  **34020 Daejeon (KR)**
• **LEE, Jin-Seung**
  **34119 Daejeon (KR)**
• **CHOI, Jae-Gun**
  **02753 Seoul (KR)**

• **MOON, Hong-Key**
  **34032 Daejeon (KR)**

(74) Representative: **Cabinet Laurent & Charras Le Contemporain**
  **50 Chemin de la Bruyère**
  **69574 Dardilly Cedex (FR)**

(56) References cited:
EP-A1- 3 217 140        EP-A2- 2 120 010
WO-A1-94/01739        KR-B1- 101 520 360
US-A1- 2009 070 058

• LEE JIN SEUNG ET AL: "North-Finding System Using Multi-Position Method With a Two-Axis Rotary Table for a Mortar", IEEE SENSORS JOURNAL, IEEE SERVICE CENTER, NEW YORK, NY, US, vol. 16, no. 16, 1 August 2016 (2016-08-01), pages 6161-6166, XP011617407, ISSN: 1530-437X, DOI: 10.1109/JSEN.2016.2582504 [retrieved on 2016-07-18]

**Description**

BACKGROUND OF THE INVENTION

1. Technical Field

The present invention relates generally to a digital sight that provides information about firing directions of a manually-portable shell-firing mortar and, more particularly, to a low-cost digital sight that is capable of controlling a position of a barrel of a manually-portable shell-firing mortar (i.e. re-firing directions) in real time, using two accelerometers and one gyroscope.

2. Description of the Related Art

As well known to those skilled in the art, before actual firing, a manually-portable weapon, such as mortar, generally goes through a preliminary firing procedure, including a primary firing stage and a secondary correcting firing stage. First, the primary firing stage requires a device for measuring azimuth and the angle of elevation, i.e. an initial angle, of a barrel of the mortar. Thereafter, the secondary correcting firing stage requires a device for determining a change in position of the barrel from the primary firing direction when correcting firing has been conducted. A compass is used for determination of the azimuth and the angle of elevation, the initial position, of the barrel, and an aiming post is used for correcting firing.

Here, the aiming post for the correcting firing is used such that after it is put up on the ground, a viewer checks the direction of the firing while viewing the aiming post. Thus, the measurement may not be precise and may be affected by geographical features such as slopes and the like. Further, if the aiming post should be set up in the cold when the ground is frozen, set-up is difficult. Furthermore, if the ground has a topography that is difficult to set up the aiming post thereon, shell-firing cannot be carried out.

Recently, a high-tech inertial sensor (three gyroscopes and three accelerometers) has been used to improve the precision of firing and provide operational convenience for a soldier. Particularly, a digital sight using an inertial sensor includes three gyroscopes and three accelerometers, which are disposed perpendicularly to each other so as to measure azimuth and the angle of elevation. However, such a sight using an inertial sensor is very expensive, and the weight and volume thereof are not suitable for a manually-portable shell-firing weapon such as a mortar.

Therefore, a low-cost sight keeping gyroscopes and accelerometers at a minimum is required.

Cited Documents

Korean Patent 1206601 B1 discloses a machine gun sighting telescope mounting device. Korean patent KR101520360 B1 shows a digital sight according to the preamble of appended independent claim 1.

SUMMARY OF THE INVENTION

Accordingly, the present invention has been made keeping in mind the above problems occurring in the prior art, and an object of the present invention is to provide a low-cost digital sight for a manually-portable shell-firing mortar according to appended independent claim 1, which has two accelerometers and one gyroscope, substituting an aiming post in a related art.

In order to accomplish the above object, according to an embodiment, the present invention provides a digital sight for a manually-portable shell-firing mortar, including: a first accelerometer; a second accelerometer arranged perpendicular to the first accelerometer; a gyroscope arranged perpendicular to the first and second accelerometers; and a controller configured to calculate and display a re-firing direction varied from a primary-firing direction, using the first and second accelerometers and the gyroscope.

The first and second accelerometers are configured to measure acceleration of the mortar that is being rotated about one end of the mortar fixed to the ground when the mortar fires a shell.

The gyroscope may be configured to enable the first and second accelerometers measuring the acceleration to be positioned perpendicular to the gyroscope when the mortar fires a shell.

The controller is configured to calculate the re-firing direction by calculating rotational displacement of the barrel using the measured acceleration of the mortar.

The controller may be configured to calculate the re-firing direction by calculating rotational displacement of the barrel using linear acceleration of the mortar obtained by gravity, high-frequency noise, and a shock applied to the mortar.

The controller may include a gyro-signal processing board, a first accelerometer-signal processing board, a second accelerometer-signal processing board, a wired/wireless communication board, an antenna, and a central processing board.

The acceleration (A) of the mortar may be calculated by following Equation:

$$A = \frac{d\omega}{dt} \times r + \omega \times \omega \times r + g$$

$$a_x = r_z\dot{\omega}_y - r_y\dot{\omega}_z - (\omega_y^2 + \omega_z^2)r_x + \omega_x\omega_y r_y + \omega_z\omega_x r_z - g\cos(\theta)\sin(\gamma)$$

$$a_y = -r_z\dot{\omega}_x + r_x\dot{\omega}_z - (\omega_z^2 + \omega_x^2)r_y + \omega_x\omega_y r_x + \omega_y\omega_z r_z + g\sin(\theta)$$

$$a_z = r_y\dot{\omega}_x - r_x\dot{\omega}_y - (\omega_x^2 + \omega_y^2)r_z + \omega_z\omega_x r_x + \omega_y\omega_z r_y + g\cos(\theta)\cos(\gamma)$$

where A is an acceleration vector of the mortar, expressed by $A = [a_x, a_y, a_z]^T$.

The rotational displacement of the mortar calculated using the measured acceleration of the mortar may be calculated by following Equation:

$$\dot{\theta} = \cos(\gamma)\omega_x + \sin(\gamma)\omega_z$$

$$\dot{\gamma} = \omega_y - \tan(\theta)\cos(\gamma)\omega_z + \tan(\theta)\sin(\gamma)\omega_x$$

$$\dot{\psi} = \frac{\cos(\gamma)}{\cos(\theta)}\omega_z - \frac{\sin(\gamma)}{\cos(\theta)}\omega_x$$

According to the digital sight for a manually-portable shell-firing mortar, upon correcting firing of the mortar, firing precision may be improved and easy manipulation may be ensured.

BRIEF DESCRIPTION OF THE DRAWINGS

The above and other objects, features and advantages of the present invention will be more clearly understood from the following detailed description taken in conjunction with the accompanying drawings, in which:

FIG. 1 is a perspective view of a digital sight for a manually-portable shell-firing mortar according to an embodiment of the present invention;
FIG. 2 is an exploded perspective view of the digital sight for a manually-portable shell-firing mortar;
FIG. 3 is a conceptual view showing the operational principle of the digital sight using a fixed coordinate system; and

DESCRIPTION OF THE PREFERRED EMBODIMENTS

It should be noted that the technical terms used herein is for the purpose of describing particular embodiments only and is not intended to limit the invention. Unless otherwise defined, the meaning of all terms used herein is the same as that commonly understood by one of ordinary skill in the art to which the present invention belongs, so that they will not be interpreted in an idealized or overly formal sense unless expressly so defined herein. The accompanying drawings are merely provided for the purpose of easily understanding the technical idea disclosed in the specification.

Thus, the technical idea is not limited to the accompanying drawings, but should be understood such that the technical idea includes all of variations, equivalents, and substitutes included in the technical spirit and scope disclosed in the specification.

A description will now be made in detail of a digital sight for a manually-portable shell-firing mortar according to an embodiment of the present invention with reference to the accompanying drawings.

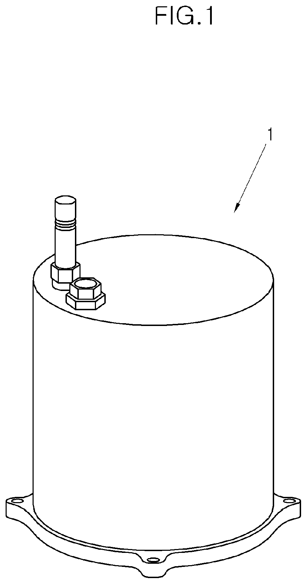

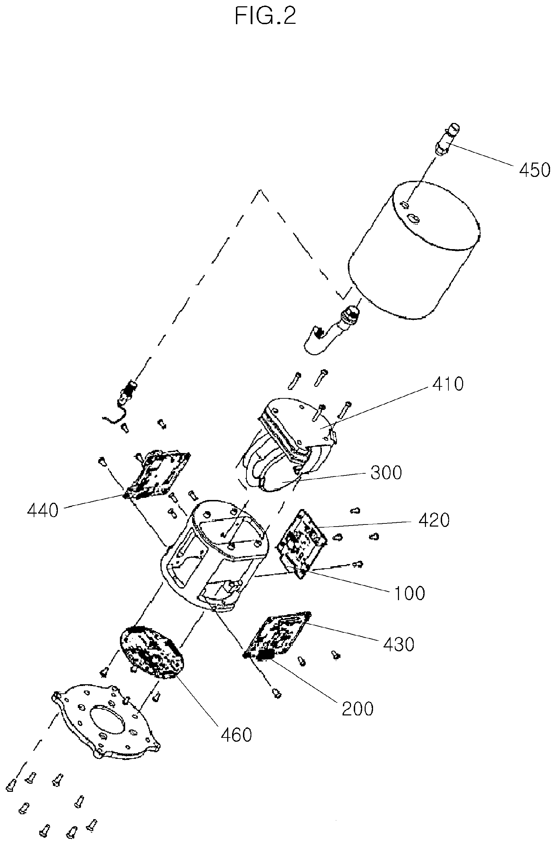

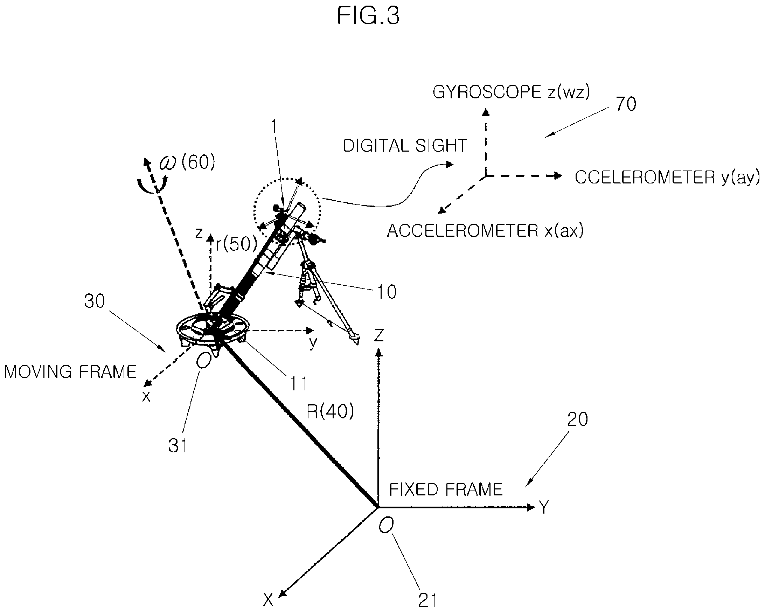

FIG. 1 is a perspective view of a digital sight for a manually-portable shell-firing mortar according to an embodiment of the present invention, FIG. 2 is an exploded perspective view of the digital sight for a manually-portable shell-firing mortar, FIG. 3 is a conceptual view showing the operational principle of the digital sight using a fixed coordinate system.

Referring to FIGS. 1 to 4, the digital sight for a manually-portable shell-firing mortar includes a first accelerometer 100, a second accelerometer 200, a gyroscope 300, and a controller 400.

The first accelerometer 100 is arranged perpendicular to the second accelerometer 200. More particularly, the first accelerometer 100 is arranged perpendicular to the second accelerometer 200 so that the first accelerometer can measure acceleration of the mortar 10 that is rotated about one end 11 thereof fixed to the ground when the mortar fires a shell. That is, the first accelerometer 100 can measure acceleration of the digital sight 1 because the digital sight is mounted to and simultaneously rotates with the mortar that is rotated about one end 11 fixed to the ground when the mortar fires a shell. Here, one end 11 of the mortar may be positioned at the origin 31 of an xyz motion coordinate system 30.

The second accelerometer 200 is arranged perpendicular to the first accelerometer 100. More particularly, the second accelerometer 200 is arranged perpendicular to the first accelerometer 100 so that the second accelerometer can measure acceleration of the mortar 10 that is rotated about one end 11 thereof fixed to the ground when the mortar fires a shell. That is, the second accelerometer 200 can measure acceleration of the digital sight 1 because the digital sight is mounted to and simultaneously rotates with the mortar that is rotated about one end 11 fixed to the ground when the mortar fires a shell. Here, one end 11 of the mortar may be positioned at the origin 31 of an xyz motion coordinate system 30. Further, also referring to FIG. 3, a plane [x(ax)-y(ay) plane] that is defined by the first and second accelerometers 100 and 200 arranged perpendicular to each other may be a plane that is perpendicular to a position vector (r) 50 of the digital sight with reference to the motion coordinate system 30.

The gyroscope 300 is arranged perpendicular to the first and second accelerometers 100 and 200. More particularly, the gyroscope 300 is configured to enable the first and second accelerometers 100 and 200 measuring the acceleration of the mortar to be positioned perpendicular to the gyroscope 300 when the mortar fires a shell. That is, when rotational displacement of the mortar is calculated using the acceleration of the mortar when the mortar fires a shell, the rotational displacement is obtained with the first and second accelerometers 100 and 200 positioned perpendicular to the gyroscope 300 by the operation of the gyroscope 300.

The controller 400 is configured to calculate and display a re-firing direction varied from a primary-firing direction, using the first and second accelerometers 100 and 200 and the gyroscope 300. More particularly, the controller 400 may calculate the re-firing direction of the mortar by calculating the rotational displacement of the mortar using the acceleration of the mortar, i.e. the acceleration of the digital sight 1 mounted to the mortar, measured by the first and second accelerometers 100 and 200, which are positioned perpendicular to the gyroscope 300 with the action of the gyroscope 300, when the mortar fires a shell. Here, the controller 400 may calculate the re-firing direction of the mortar by calculating linear acceleration of the mortar obtained in response to gravity, high-frequency noise, and a shock applied to the mortar 10, i.e. those applied to the digital sight 1 mounted to the mortar.

Here, the controller 400 may include a gyro-signal processing board 410, a first accelerometer-signal processing board 420, a second accelerometer-signal processing board 430, a wired/wireless communication board 440, an antenna 450, and a central processing board 460.

The gyroscope 300 may be mounted to the gyro-signal processing board 410 such that the gyroscope 300 is arranged perpendicular to the first and second accelerometers 100 and 200. The first accelerometer 100 may be mounted to the first accelerometer-signal processing board 420 such that the first accelerometer 100 is arranged perpendicular to the second accelerometer 200. The second accelerometer 200 may be mounted to the second accelerometer-signal processing board 430 such that the second accelerometer 200 is arranged perpendicular to the first accelerometer 100. The wired/wireless communication board 440 may communicate with the exterior using the antenna 450. The central processing board 460 may calculate the re-firing direction of the mortar by calculating the rotational displacement of the mortar using the acceleration of the mortar measured by the first and second accelerometers 100 and 200, which are positioned perpendicular to the gyroscope 300 with the action of the gyroscope 300, when the mortar fires a shell.

A description will now be made in detail of the calculation of the re-firing direction using the digital sight for a manually-portable shell-firing mortar with reference to the accompanying drawings.

Referring to FIG. 2, an XYZ coordinate system 20 is a fixed frame having the origin (O) 21, and an xyz coordinate system 30 is a moving frame having the rotational origin (o) 31. Further, a vector (R) 40 is a position vector of the xyz coordinate system 30 about the origin 21 of the XYZ coordinate system 20. Further, a vector (r) 50 is a position vector of the digital sight 1 about the rotational origin 31 of the xyz coordinate system 30. Further, a vector (w) 60 is a rotation vector of the xyz coordinate system 30.

Here, acceleration (A) of the digital sight 1 in the xyz coordination system 20 can be expressed by following Equation 1:

Equation 1

$$A = \frac{d^2R}{dt^2} + \left(\frac{d^2r}{dt^2} + \omega \times \frac{dr}{dt}\right) + \left[\frac{d\omega}{dt} \times r + \omega \times \left(\frac{dr}{dt} + \omega \times r\right)\right] + g$$

Here, (A) is an acceleration vector of the mortar, expressed by $A = [a_x, a_y, a_z]^T$, (w) 60 is a rotation vector of the mortar on the moving frame, expressed by $w = [w_x, w_y, w_z]^T$, (r) 50 is a position vector of the digital sight on the moving frame, expressed by $r = [r_x, r_y, r_z]^T$., and g is a gravity vector (gravity acceleration), expressed by $g = [g_x, g_y, g_z]^T$.

Here, since the shell-firing mortar is not moved, and the digital sight 1 is fixed in the xyz coordinate system 30, $d^2R/dt^2$, $d^2r/dt^2$, and $dr/dt$ do not exist. Then, Equation 1 can be expressed as follows:

Equation 2

$$A = \frac{d\omega}{dt} \times r + \omega \times \omega \times r + g$$

Equation 2 can be specifically expressed as follows:

Equation 3

$$\begin{bmatrix} a_x \\ a_y \\ a_z \end{bmatrix} = \begin{bmatrix} 0 & -\dot\omega_z & \dot\omega_y \\ \dot\omega_z & 0 & -\dot\omega_x \\ -\dot\omega_y & \dot\omega_x & 0 \end{bmatrix} \begin{bmatrix} r_x \\ r_y \\ r_z \end{bmatrix} + \begin{bmatrix} -\omega_y^2 - \omega_z^2 & \omega_x\omega_y & \omega_z\omega_x \\ \omega_x\omega_y & -\omega_z^2 - \omega_x^2 & \omega_y\omega_z \\ \omega_z\omega_x & \omega_y\omega_z & -\omega_x^2 - \omega_y^2 \end{bmatrix} \begin{bmatrix} r_x \\ r_y \\ r_z \end{bmatrix} + \begin{bmatrix} g_x \\ g_y \\ g_z \end{bmatrix}$$

Equation 3 can be specifically expressed as follows:

Equation 4

$$\begin{bmatrix} a_x \\ a_y \\ a_z \end{bmatrix} = \begin{bmatrix} 0 & r_z & -r_y \\ -r_z & 0 & r_x \\ r_y & -r_x & 0 \end{bmatrix} \begin{bmatrix} \dot\omega_x \\ \dot\omega_y \\ \dot\omega_z \end{bmatrix} + \begin{bmatrix} -\omega_y^2 - \omega_z^2 & \omega_x\omega_y & \omega_z\omega_x \\ \omega_x\omega_y & -\omega_z^2 - \omega_x^2 & \omega_y\omega_z \\ \omega_z\omega_x & \omega_y\omega_z & -\omega_x^2 - \omega_y^2 \end{bmatrix} \begin{bmatrix} r_x \\ r_y \\ r_z \end{bmatrix} + \begin{bmatrix} g_x \\ g_y \\ g_z \end{bmatrix}$$

If Equation 4 has "C" that satisfies following Equation 5, angular acceleration can be calculated using acceleration measured by the first and second accelerometers 100 and 200, and thus angular acceleration of the digital sight mounted to the mortar can be obtained by integrating the former angular acceleration.

Equation 5

$$\begin{bmatrix} \dot{\omega}_x \\ \dot{\omega}_y \\ \dot{\omega}_z \end{bmatrix} = (C \begin{bmatrix} 0 & r_z & -r_y \\ -r_z & 0 & r_x \\ r_y & -r_x & 0 \end{bmatrix})^{-1} C(\begin{bmatrix} a_x \\ a_y \\ a_z \end{bmatrix} - \begin{bmatrix} -\omega_y^2 - \omega_z^2 & \omega_x \omega_y & \omega_z \omega_x \\ \omega_x \omega_y & -\omega_z^2 - \omega_x^2 & \omega_y \omega_z \\ \omega_z \omega_x & \omega_y \omega_z & -\omega_x^2 - \omega_y^2 \end{bmatrix} \begin{bmatrix} r_x \\ r_y \\ r_z \end{bmatrix} - \begin{bmatrix} g_x \\ g_y \\ g_z \end{bmatrix})$$

However, "C" for satisfying Equation 5 can exclude an orthogonal structure of the first and second accelerometers. This causes a problem that an existing product having a common orthogonal structure cannot be used.
Equation 4 can be expressed in a different form by Equation 6:

Equation 6

$$a_x = r_z \dot{\omega}_y - r_y \dot{\omega}_z - (\omega_y^2 + \omega_z^2) r_x + \omega_x \omega_y r_y + \omega_z \omega_x r_z - g\cos(\theta)\sin(\gamma)$$

$$a_y = -r_z \dot{\omega}_x + r_x \dot{\omega}_z - (\omega_z^2 + \omega_x^2) r_y + \omega_x \omega_y r_x + \omega_y \omega_z r_z + g\sin(\theta)$$

$$a_z = r_y \dot{\omega}_x - r_x \dot{\omega}_y - (\omega_x^2 + \omega_y^2) r_z + \omega_z \omega_x r_x + \omega_y \omega_z r_y + g\cos(\theta)\cos(\gamma)$$

Here, ax, ay, and az are respective vector components of a vector of acceleration (A) of the mortar, g is gravity acceleration, and θ is a pitch angle of the mortar, and γ is a roll angle of the mortar.
Here, since an axis, e.g. wz, can be measured by the gyroscope 300, first and second terms of Equation 6 can be re-expressed by Equation 7:

Equation 7

$$\dot{\omega}_x = \frac{g}{r_z}\sin(\theta) + [-a_y + r_x \dot{\omega}_z - (\omega_z^2 + \omega_x^2) r_y + \omega_x \omega_y r_x + \omega_y \omega_z r_z]/r_z$$

$$\dot{\omega}_y = \frac{g}{r_z}\cos(\theta)\sin(\gamma) + [a_x + r_y \dot{\omega}_z + (\omega_y^2 + \omega_z^2) r_x - \omega_x \omega_y r_y - \omega_z \omega_x r_z]/r_z$$

Since wz-related terms are measured in Equation 7, if an initial value of the right side of Equation 7 is known, wx and wy can be obtained. That is, a position of a barrel of the mortar can be obtained by following Equation 8:

Equation 8

$$\dot{\theta} = \cos(\gamma)\omega_x + \sin(\gamma)\omega_z$$

$$\dot{\gamma} = \omega_y - \tan(\theta)\cos(\gamma)\omega_z + \tan(\theta)\sin(\gamma)\omega_x$$

$$\dot{\psi} = \frac{\cos(\gamma)}{\cos(\theta)}\omega_z - \frac{\sin(\gamma)}{\cos(\theta)}\omega_x$$

Here, $\dot{\theta}$ is a current pitch angle, $\dot{\gamma}$ is a current roll angle of the mortar, and $\dot{\Psi}$ is a current yaw angle of the mortar. Further, θ is an initial pitch angle of the mortar, γ is an initial roll angle of the mortar, and ψ is an initial yaw angle of the mortar.

**Claims**

1. A digital sight for a manually-portable shell-firing mortar **characterized in that** it comprises:

  - a first accelerometer (100);
  - a second accelerometer (200) arranged such that the sensitive axis of the second accelerometer (200) is perpendicular to the sensitive axis of the first accelerometer (100);
  - a gyroscope (300) arranged such that the sensitive axis of the gyroscope (300) is perpendicular to the sensitive axes of the first and second accelerometers (100, 200) respectively; and
  - a controller (400);

  **characterized in that**, in use, when the mortar (10) is rotated about one end (11) of the mortar (10) fixed to the ground when the mortar fires a shell,

  - the first and second accelerometers (100, 200) are configured to measure acceleration of the mortar (10);
  - the gyroscope (300) is configured to measure the rotation vector (60) of the mortar (10); and
  - the controller (400) is configured to calculate and display a re-firing direction varied from a primary-firing direction, using the first and second accelerometers (100, 200) and the gyroscope (300) by calculating rotational displacement of a barrel of the mortar using the measured acceleration and the measured rotation vector of the mortar (10).

2. The digital sight for a manually-portable shell-firing mortar according to claim 1, wherein the gyroscope (300) is configured to enable the first and second accelerometers (100, 200) measuring the acceleration to be positioned perpendicular to the gyroscope (300) when the mortar (10) fires a shell.

3. The digital sight for a manually-portable shell-firing mortar according to claim 1, wherein the controller (400) is configured to calculate the re-firing direction by calculating rotational displacement of the barrel using linear acceleration of the mortar (10) obtained by gravity, high-frequency noise, and a shock applied to the mortar.

4. The digital sight for a manually-portable shell-firing mortar according to claim 1, wherein the controller (400) comprises a gyro-signal processing board (410), a first accelerometer-signal processing board (420), a second accelerometer-signal processing board (430), a wired/wireless communication board (440), an antenna (450), and a central processing board (460).

**Patentansprüche**

1. °/ Ein digitales Visier für einen von Hand tragbaren Mörser, der Granaten abfeuert, **dadurch gekennzeichnet, dass** es:

  - einen ersten Beschleunigungsmesser (100);
  - einen zweiten Beschleunigungsmesser (200), der so angeordnet ist, dass die empfindliche Achse des zweiten Beschleunigungsmessers (200) senkrecht zum ersten Beschleunigungsmesser (100) steht;
  - ein Gyroskop (300), das so angeordnet ist, dass die empfindliche Achse des Gyroskops (300) senkrecht zu den empfindlichen Achsen jeweils des ersten und zweiten Beschleunigungsmessers (100, 200) steht; und
  - eine Steuerung (400) umfasst;

  **dadurch gekennzeichnet, dass** beim Einsatz der Mörser (10) um ein Ende (11) des am Boden befestigten Mörsers (10) gedreht wird, wenn der Mörser eine Granate abfeuert,

  - der erste und zweite Beschleunigungsmesser (100, 200) dazu konfiguriert sind, die Beschleunigung des Mörsers (10) zu messen;
  - das Gyroskop (300) dazu konfiguriert ist, den Drehvektor (60) des Mörsers (10) zu messen; und
  - die Steuerung (400) zum Berechnen und Anzeigen einer von einer Primärzündrichtung abweichenden Wiederzündrichtung unter Verwendung des ersten und des zweiten Beschleunigungsmessers (100, 200) und des Gyroskops, durch Berechnung der Drehverschiebung eines Mörserlaufs unter Verwendung der gemessenen Beschleunigung und des gemessenen Drehvektor des Mörsers (10) konfiguriert ist.

**2.** °/ Digitales Visier für einen von Hand tragbaren Mörser, der Granaten abfeuert, gemäß Anspruch 1, wobei das Gyroskop (300) dazu konfiguriert ist, den ersten und zweiten Beschleunigungsmesser (100, 200) zu aktivieren, durch Messung der Beschleunigung, um senkrecht zum Gyroskop (300) positioniert zu werden, wenn der Mörser (10) eine Granate abschießt.

**3.** °/ Digitales Visier für einen von Hand tragbaren Mörser, der Granaten abfeuert, gemäß Anspruch 1, wobei die Steuerung (400) dazu konfiguriert ist, die Wiederzündrichtung durch Berechnung der Drehverschiebung eines Mörserlaufs unter Verwendung der linearen Beschleunigung des Mörsers (10) zu berechnen, die sich durch Schwerkraft, Hochfrequenzrauschen und einer Erschütterung des Mörsers ergibt.

**4.** °/ Digitales Visier für einen von Hand tragbaren Mörser, der Granaten abfeuert, gemäß Anspruch 1, wobei die Steuerung (400) eine Gyrosignal-Verarbeitungsplatine (410), eine erste Beschleunigungsmesser-Verarbeitungsplatine (420), eine zweite Beschleunigungsmesser-Verarbeitungsplatine (430), eine verkabelte/kabellose Kommunikationsplatine (440), eine Antenne (450) und eine zentrale Verarbeitungsplatine (460) umfasst.

## Revendications

**1.** Viseur numérique pour mortier de tir d'obus portable, **caractérisé en ce qu'**il comprend :

- un premier accéléromètre (100) ;
- un second accéléromètre (200) agencé de sorte que l'axe sensible du second accéléromètre (200) soit perpendiculaire à l'axe sensible du premier accéléromètre (100) ;
- un gyroscope (300) agencé de sorte que l'axe sensible du gyromètre (300) soit perpendiculaire aux axes sensibles des premier et second accéléromètres (100, 200), respectivement ; et
- une commande (400) ;

**caractérisé en ce qu'**en utilisation, lorsque le mortier (10) est entraîné en rotation autour d'une extrémité (11) du mortier (10) fixée au sol lorsque le mortier tire un obus,

- les premier et second accéléromètres (100, 200) sont configurés pour mesurer une accélération du mortier (10) ;
- le gyroscope (300) est configuré pour mesurer le vecteur de rotation (60) du mortier (10) ; et
- la commande (400) est configurée pour calculer et afficher une direction de nouveau tir modifiée par rapport à une direction de tir primaire, en utilisant les premier et second accéléromètres (100, 200) et le gyroscope (300) en calculant le déplacement en rotation d'un canon de mortier en utilisant l'accélération mesurée et le vecteur de rotation mesuré du mortier (10).

**2.** Viseur numérique pour mortier de tir d'obus portable selon la revendication 1, dans lequel le gyroscope (300) est configuré pour permettre aux premier et second accéléromètres (100, 200) mesurant l'accélération d'être positionnés perpendiculairement au gyroscope (300) lorsque le mortier (10) tire un obus.

**3.** Viseur numérique pour mortier de tir d'obus portable selon la revendication 1, dans lequel la commande (400) est configurée pour calculer la direction de nouveau tir en calculant le déplacement en rotation du canon en utilisant une accélération linéaire du mortier (10) obtenu par la gravité, un bruit haute fréquence, et un choc appliqué au mortier.

**4.** Viseur numérique pour mortier de tir d'obus portable selon la revendication 1, dans lequel la commande (400) comprend une carte de traitement de signal gyroscopique (410), une première carte de traitement de signal d'accéléromètre (420), une seconde carte de traitement de signal d'accéléromètre (430), une carte de communication câblée/sans fil (440), une antenne (450) et une carte de traitement centrale (460).

FIG.1

1

# FIG.2

450

410

300

440

420

100

430

200

460

# FIG.3

GYROSCOPE z(wz) 70

DIGITAL SIGHT

CCELEROMETER y(ay)

ACCELEROMETER x(ax)

$\omega$ (60)

1

r(50)

10

30

11

MOVING FRAME

31

R(40)

20

FIXED FRAME

21

EP 3 109 585 B1

**EP 3 109 585 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1206601 B1
- KR 101520360 B1